# EUROPÄISCHE PATENTSCHRIFT

(11) **EP 2 848 838 B1**
(45) Veröffentlichungstag und Bekanntmachung des Hinweises auf die Patenterteilung: **07.11.2018**
(21) Anmeldenummer: 14181236.2
(22) Anmeldetag: 18.08.2014
(51) Int. Cl.: F16G 11/00, F16G 11/04, F24C 15/20, F16G 11/10

(54) **Zugmittelfestigungseinrichtung für ein Haushaltgerät, Haushaltgerät und Verfahren**
Traction device fixing device for a household appliance, household appliance and method
Dispositif de fixation de moyen de traction pour un appareil ménager, appareil ménager et procédé

(30) Priorität: 05.09.2013 DE 102013109707
(43) Veröffentlichungstag der Anmeldung: 18.03.2015
(73) Patentinhaber: Miele & Cie. KG, 33332 Gütersloh (DE)
(72) Erfinder: Ricke, Michael, 59757 Arnsberg (DE); Baehr, Thomas, 59846 Sundern (DE)

(56) Entgegenhaltungen:
- JP-A- H04 263 728
- JP-A- 2006 317 126
- JP-A- 2008 170 034
- US-A1- 2013 198 999

## Beschreibung

Die vorliegende Erfindung betrifft ein Haushaltgerät, insbesondere ein Dunstabzugshaube, mit einer motorisch angetriebenen Gerätekomponente gemäß dem Gegenstand des Anspruchs 1 sowie ein Verfahren zum Befestigen eines Zugmittels unter Verwendung des Haushaltgeräts gemäß dem Gegenstand des Anspruchs 1.

Die Erfindung betrifft ferner ein Haushaltgerät, umfassend eine Antriebseinrichtung mit einer Welle, an der ein Zugmittel befestigt ist, sowie ein Verfahren zum Befestigen eines Zugmittels. Bei einem Haushaltgerät, welches zum Beispiel eine Waschmaschine, ein Wäschetrockner, ein Kühlschrank, ein Gargerät wie ein Backofen oder Dampfgarer aber auch eine Dunstabzugshaube sein kann, kann es je nach Anwendungsfall verschiedene Gerätekomponenten geben, die motorisch angetrieben sind.

Dunstabzugshauben zum Beispiel werden in der Küche oft oberhalb eines Kochbereichs, beispielsweise eines Herdes oder Kochfelds bzw. einer Kochmulde, eingesetzt, um den beim Kochen aufsteigenden Wrasen einzusaugen und dessen Fettbestandteile und/oder Geruchsstoffe herauszufiltern und/oder um den Wrasen nach außerhalb der Küche abzuführen. Dazu weisen Dunstabzugshauben einen Ansaugbereich für Wrasen auf, durch den der vom Kochbereich aufsteigende Wrasen mithilfe eines Gebläses in die Dunstabzugshaube einsaugt wird.

Dabei ist es vorteilhaft, wenn ein möglichst großer Anteil des Wrasens z. B. oberhalb eines Kochfeldes zu dem Ansaugbereich geleitet wird, wo der Wrasen dann abgesaugt werden kann. Dies wird in der Regel durch eine Wrasenleiteinrichtung, den sogenannten Wrasenschirm, der Dunstabzugshaube erreicht, über den der Wrasen gesammelt und zu dem Absaugbereich der Dunstabzugshaube geleitet wird.

Solch ein Wrasenschirm sollte vorteilhafterweise bei Verwendung der Dunstabzugshaube eine möglichst große Fläche zum Auffangen des aufsteigenden Wrasens zur Verfügung stellen. Ferner sollte ein Wrasenschirm bei Verwendung der Dunstabzugshaube möglichst nah über der Stelle, von welcher der Wrasen aufsteigt, positioniert sein. Wenn die Dunstabzugshaube nicht gebraucht wird, ist ein großflächiger und/oder dicht über dem Kochbereich positionierter Wrasenschirm jedoch unpraktisch und optisch weniger ansprechend. Insbesondere wenn in einer Wohnung der Küchenbereich und der Wohnbereich frei aneinandergrenzen bzw. ineinander übergehen, sollen oft Küchengeräte wie zum Beispiel eine Dunstabzugshaube möglichst wenig auffallen.

Daher sind Dunstabzugshauben mit Wrasenschirmen bekannt geworden, die vor oder bei der Verwendung der Dunstabzugshaube ausgefahren und anschließend wieder eingefahren werden können. Dabei können die Wrasenschirme per Hand, mechanisch unterstützt oder auch automatisch mittels eines Motors aus- und eingefahren werden.

Entsprechende Dunstabzugshauben sind in verschiedenen Ausführungen aus dem Stand der Technik bekannt, so zum Beispiel aus der DE3822510A1, der DE102005060356A1 und der DE4142475C2.

Des Weiteren offenbart US2013/0198999A1 eine Haltevorrichtung zum fixieren eines länglichen Halteelements.

Bei anderen Haushaltgerätetypen kann die motorisch zu bewegende Gerätekomponente zum Beispiel eine Gerätetür oder -klappe sein.

Um eine Wirkverbindung zwischen einer Antriebswelle bzw. einer Welle einer Antriebseinrichtung und der zu bewegenden Gerätekomponente herzustellen, sind verschiedene Koppeleinrichtungen denkbar. So kann eine solche Koppeleinrichtung zum Beispiel als ein Zugmittel, insbesondere als Seil, Kette oder Riemen und hier vor allem als Flachriemen, ausgebildet sein. Zur Befestigung eines Zugmittels an einer Welle einer Antriebseinrichtung sind verschiedene Befestigungsmittel wie Schraube oder Niet bekannt. Diese bringen jedoch Nachteile mit sich. So ist beispielsweise der Montageaufwand für die Befestigung des Zugmittels an der Welle mittels Schraube oder Niet sehr hoch, da zusätzliche Hilfsmittels wie zum Beispiel Werkzeug in Form eines Schraubendrehers oder Hammers, und/oder komplizierte Arbeitsschritte erforderlich sind. Außerdem besteht bei der Befestigung des Zugmittels an der Welle mittels Schraube oder Niet die Gefahr, dass sich der Durchmesser der Welle ungleichmäßig vergrößert und/oder die Laufruhe dadurch verschlechtert wird, so dass der Motor der Antriebseinrichtung mehr Kraft aufbringen muss und deshalb von vorn herein größer dimensioniert bzw. stärker ausgelegt wird, um die jeweilige Gerätekomponente trotzdem bewegen zu können. Ein größerer Motor erfordert jedoch entsprechend großen Bauraum, der in einem Haushaltgerät oft nicht zur Verfügung steht. Außerdem verbraucht ein größer dimensionierter bzw. stärker ausgelegter Motor entsprechend mehr Energie, was nachteilig ist in Zeiten immer stärkeren Umweltbewusstseins seitens der Kunden und steigender Anforderungen an die Energieeffizienz von Haushaltgeräten.

Es ist daher eine Aufgabe der vorliegenden Erfindung, eine Zugmittelbefestigungseinrichtung für ein Haushaltgerät zur Verfügung zu stellen, mittels der ein Zugmittel an einer Welle einer Antriebseinrichtung des Haushaltgeräts auf einfache und sichere Weise befestigbar ist, ohne dass dabei die Laufruhe der Antriebseinrichtung und Welle beeinträchtigt wird.

Weitere Aspekte der Erfindung bestehen darin, ein Haushaltgerät mit einer Antriebseinrichtung mit einer Welle, an der ein Zugmittel befestigt ist, sowie ein Verfahren zum Befestigen eines Zugmittels zur Verfügung zu stellen, bei welchen wenigstens einer der oben genannten Nachteile beseitigt ist.

Die Aufgabe wird gelöst durch ein Haushaltgerät mit den Merkmalen des Anspruchs 1 und mit einem Verfahren mit den Merkmalen des Anspruchs 15. Bevorzugte Weiterbildungen der Erfindung sind Gegenstand der jeweiligen Unteransprüche. Weitere Vorteile und Merkmale der Erfindung ergeben sich aus den Ausführungsbeispielen.

Eine Zugmittelbefestigungseinrichtung für ein Haushaltgerät eignet sich zur Befestigung eines Zugmittels an einer Welle einer Antriebseinrichtung des Haushaltgeräts und fasst dabei einen inneren Spulenteil und einen äußeren Spulenteil. Der innere Spulenteil weist dabei einen inneren Hülsenkörper, eine Wellenaufnahme für die Welle der Antriebseinrichtung und eine Zugmittelaufnahme für einen Endabschnitt des Zugmittels auf, und der äußere Spulenteil weist einen äußeren Hülsenkörper und einen Zugmittelauslass für das Zugmittel auf. Erfindungsgemäß ist der Außendurchmesser des inneren Hülsenkörpers kleiner als der Innendurchmesser des äußeren Hülsenkörpers, so dass der innere Hülsenkörper wenigstens abschnittsweise in dem äußeren Hülsenkörper aufnehmbar ist, wobei ein dem Endabschnitt benachbarter Abschnitt des Zugmittels zwischen dem inneren Hülsenkörper und dem äußeren Hülsenkörper nach der Art einer Presspassung aufnehmbar ist.

Eine solche Zugmittelbefestigungseinrichtung bietet viele Vorteile. So sind außer den beiden Spulenteilen keine weiteren Befestigungsmittel wie Schraube oder Niet erforderlich, um das Zugmittel an der Welle zu befestigen. Auch braucht es zur Befestigung keine zusätzlichen Hilfsmittel wie Schraubendreher oder Hammer, da die beiden Spulenteile von Hand zusammensteckbar ausgebildet sind.

Gemäß einer Ausführungsform ist die Zugmittelaufnahme als eine Aussparung an dem inneren Hülsenkörper ausgebildet ist, wobei die Zugmittelaufnahme insbesondere einen Anschlag für den Endabschnitt des Zugmittels aufweist. Durch die Aufnahme und insbesondere durch den Anschlag ist eine einfache und trotzdem genaue Montage ermöglicht. Bevorzugt ist die Zugmittelaufnahme dabei schlitzartig ausgebildet.

Gemäß einer weiteren Ausführungsform ist benachbart zur Zugmittelaufnahme ein Ablenkvorsprung für einen dem Endabschnitt benachbarten Abschnitt des Zugmittels an dem inneren Hülsenkörpers ausgebildet, wobei der Ablenkvorsprung insbesondere eine Ablenkschräge aufweist.

Gemäß einer weiteren Ausführungsform ist der Zugmittelauslass als eine Aussparung an dem äußeren Hülsenkörper ausgebildet. Der dem Endabschnitt benachbarte Abschnitt des Zugmittels, welcher zwischen dem inneren Hülsenkörper und dem äußeren Hülsenkörper nach der Art einer Presspassung aufnehmbar ist, kann durch den Zugmittelauslass am äußeren Hülsenkörper den Zwischenraum zwischen innerem Hülsenkörper und äußerem Hülsenkörper verlassen.

Gemäß einer weiteren Ausführungsform ist der innere Hülsenkörper derart in dem äußeren Hülsenkörper aufnehmbar, dass die am inneren Hülsenkörper ausgebildete Zugmittelaufnahme von dem äußeren Hülsenkörper im Wesentlichen überdeckt ist. Dadurch kann der Endabschnitt des Zugmittels noch sicherer in der Zugmittelaufnahme gehalten werden.

Gemäß einer weiteren Ausführungsform ist der innere Hülsenkörper derart in dem äußeren Hülsenkörper aufnehmbar, dass der am inneren Hülsenkörper ausgebildete Ablenkvorsprung im Wesentlichen unterhalb des am äußeren Hülsenkörper ausgebildeten Zugmittelauslasses angeordnet ist. Durch den Ablenkvorsprung und insbesondere durch dessen Ablenkschräge kann der dem Endabschnitt benachbarte Abschnitt des Zugmittels, welcher zwischen dem inneren Hülsenkörper und dem äußeren Hülsenkörper nach der Art einer Presspassung aufnehmbar ist, in vordefinierter Art und Weise von dem inneren Hülsenkörper auf den äußeren Hülsenkörper abgelenkt werden, wobei der dem Endabschnitt benachbarte Abschnitt des Zugmittels durch den Zugmittelauslass am äußeren Hülsenkörper den Zwischenraum zwischen innerem Hülsenkörper und äußerem Hülsenkörper verlassen kann.

Gemäß einer weiteren Ausführungsform ist ein dem Endabschnitt benachbarter Abschnitt des Zugmittels zwischen dem inneren Hülsenkörper und dem äußeren Hülsenkörper derart aufnehmbar, dass er von der Zugmittelaufnahme bis zum Ablenkvorsprung verläuft und dabei den inneren Hülsenkörper wenigstens anteilig umfänglich umgibt, wobei der dem Endabschnitt benachbarte Abschnitt des Zugmittels bevorzugter Weise den inneren Hülsenkörper im Wesentlichen vollumfänglich umgibt. Je größer der Anteil ist, zu dem der dem Endabschnitt benachbarte Abschnitt des Zugmittels den inneren Hülsenkörper umfänglich umgeben kann, desto größer ist der Abschnitt des Zugmittels, welcher zwischen dem inneren Hülsenkörper und dem äußeren Hülsenkörper nach der Art einer Presspassung aufnehmbar ist, und also der Abschnitt des Zugmittels, auf den ein Pressdruck ausgeübt werden kann, um die Befestigung des Zugmittels besonders sicher zu gestalten.

Gemäß einer weiteren Ausführungsform ist an der äußeren Mantelfläche des inneren Hülsenkörpers und/oder an der inneren Mantelfläche des äußeren Hülsenkörpers wenigstens eine Klemmkontur ausgebildet. Bevorzugt ist dabei an der inneren Mantelfläche des äußeren Hülsenkörpers wenigstens eine erste Klemmkontur angeordnet ist und an der äußeren Mantelfläche des inneren Hülsenkörpers wenigstens eine zweite Klemmkontur angeordnet. Besonders bevorzugt ist dabei der innere Hülsenkörper derart in dem äußeren Hülsenkörper aufnehmbar, dass die erste Klemmkontur und die zweite Klemmkontur korrespondieren und insbesondere sich gegenüberliegen, wobei insbesondere die erste Klemmkontur als Vorsprung oder Vertiefung an der inneren Mantelfläche des äußeren Hülsenkörpers ausgebildet ist und insbesondere die zweite Klemmkontur als Vertiefung oder Vorsprung an der äußeren Mantelfläche des inneren Hülsenkörpers ausgebildet ist. Durch wenigstens eine solche Klemmkontur kann punktuell ein noch höherer Druck auf den zwischen dem inneren Hülsenkörper und dem äußeren Hülsenkörper aufnehmbaren Abschnitt des Zugmittels ausgeübt werden, um die Befestigung des Zugmittels noch sicher zu gestalten. Dies gilt insbesondere, wenn sich eine erste und eine zweite Klemmkontur korrespondierend gegenüberliegen. Ist dann dabei die erste Klemmkontur als Vorsprung und die zweite Klemmkontur als Vertiefung (oder umgekehrt) ausgebildet, wird der zwischen dem inneren Hülsenkörper und dem äußeren Hülsenkörper aufnehmbaren Abschnitt des Zugmittels punktuell insbesondere mäanderartig verformt. Auch dadurch kann die Befestigung des Zugmittels noch sicher gestaltet werden.

Gemäß einer weiteren Ausführungsform ist benachbart zu einer der Stirnseiten des inneren Hülsenkörpers und/oder benachbart zu einer der Stirnseiten des äußeren Hülsenkörpers eine flanschartige Auskragung an dem jeweiligen Hülsenkörper ausgebildet, welche insbesondere im Wesentlichen vollumfänglich an dem jeweiligen Hülsenkörper ausgebildet ist. Im montierten Zustand der Zugmittelbefestigungseinrichtung stellt die flanschartige Auskragung zum Beispiel eine seitliche Führung das auf die Welle aufzuwickelnde Zugmittel dar. Bevorzugt ist dabei vorgesehen, dass an der flanschartigen Auskragung des inneren Hülsenkörpers und/oder an der flanschartigen Auskragung des äußeren Hülsenkörpers ein Positioniervorsprung und/oder eine Positionieraussparung ausgebildet ist, wobei der äußere Hülsenkörper an einer seiner Stirnseiten und/oder der innere Hülsenkörper an einer seiner Stirnseiten eine Positionieraussparung und/oder einen Positioniervorsprung aufweist, und wobei der innere Hülsenkörper derart in dem äußeren Hülsenkörper aufnehmbar ist, dass der Positioniervorsprung in der Positionieraussparung aufnehmbar ist und/oder dem Positioniervorsprung in der Positionieraussparung aufnehmbar ist. Durch das Zusammenwirken eines Positioniervorsprungs mit einer Positionieraussparung, kann bei der Montage der Zugmittelbefestigungseinrichtung eine korrekte bzw. vorbestimmte Ausrichtung des inneren Spulenteiles zu dem äußeren Spulenteil (oder umgekehrt) gewährleistet werden und im montierten Zustand der Zugmittelbefestigungseinrichtung sowie auch während des Betriebs eine korrekte bzw. vorbestimmte Ausrichtung des inneren Spulenteiles zu dem äußeren Spulenteil (oder umgekehrt) beibehalten werden.

Ein erfindungsgemäßes Haushaltgerät umfasst eine Antriebseinrichtung mit einer Welle, an der ein Zugmittel mittels einer erfindungsgemäßen Zugmittelbefestigungseinrichtung befestigt ist. Wie bereits erwähnt, umfasst eine solche Zugmittelbefestigungseinrichtung einen inneren Spulenteil und einen äußeren Spulenteil, wobei der innere Spulenteil einen inneren Hülsenkörper, eine Wellenaufnahme für die Welle der Antriebseinrichtung und eine Zugmittelaufnahme für einen Endabschnitt des Zugmittels aufweist, und wobei der äußere Spulenteil einen äußeren Hülsenkörper und einen Zugmittelauslass für das Zugmittel aufweist. Ferner ist der Außendurchmesser des inneren Hülsenkörpers kleiner ist als der Innendurchmesser des äußeren Hülsenkörpers und der innere Hülsenkörper ist wenigstens abschnittsweise in dem äußeren Hülsenkörper aufgenommen. Die Welle ist dabei in der Wellenaufnahme aufgenommen. Der Endabschnitt des Zugmittels ist in der Zugmittelaufnahme aufgenommen, und ein dem Endabschnitt benachbarter Abschnitt des Zugmittels ist zwischen dem inneren Hülsenkörper und dem äußeren Hülsenkörper nach der Art einer Presspassung aufgenommen.

Ein solches Haushaltgerät bietet viele Vorteile, wie sie insbesondere zuvor schon zur erfindungsgemäßen Zugmittelbefestigungseinrichtung beschrieben wurden. Vor allem wird durch die Zugmittelbefestigungseinrichtung weder der Durchmesser der Welle ungleichmäßig vergrößert noch die Laufruhe der Antriebseinrichtung negativ beeinträchtigt. Dadurch fallen die Motorgeräusche geringer aus, und in vielen Fällen kann der Motor der Antriebseinrichtung von vorn herein kleiner bzw. schwächer dimensioniert sein als bei herkömmlichen Haushaltgeräten. Der dadurch eingesparte Bauraum und die dadurch verminderte Energieaufnahme sowie die entsprechend gesteigerte Energieeffizienz des erfindungsgemäßen Haushaltgeräts sind weitere wesentliche Vorteile.

Gemäß einer Ausführungsform ist die Wellenaufnahme durch die innere Mantelfläche des inneren Hülsenkörpers definiert, wobei der Innendurchmesser des inneren Hülsenkörpers kleiner ist als der Außendurchmesser der Welle, und wobei die Welle in der Aufnahme des inneren Hülsenkörper nach der Art einer Presspassung aufgenommen ist. Dadurch ist auch die Montage der Zugmittelbefestigungseinrichtung an der Welle auf einfache Weise und insbesondere Werkzeuglos durch einfaches Aufstecken ermöglicht.

Gemäß einer weiteren Ausführungsform ist die Wellenaufnahme durch die innere Mantelfläche des inneren Hülsenkörpers definiert, wobei die innere Mantelfläche des inneren Hülsenkörpers und die äußere Mantelfläche der Welle jeweils wenigstens eine Abflachung aufweist, und wobei die Abflachung der inneren Mantelfläche des inneren Hülsenkörpers mit der Abflachung der äußeren Mantelfläche der Welle korrespondiert, so dass die Welle in der Aufnahme des inneren Hülsenkörper drehfest aufgenommen ist. Dadurch ist ein sicherer Halt der Zugmittelbefestigungseinrichtung auf der Welle und eine gute Kraftübertragung von der Welle auf die Zugmittelbefestigungseinrichtung und über diese auf das Zugmittel gewährleistet.

Ein erfindungsgemäßes Verfahren eignet sich zum Befestigen eines Zugmittels, wobei eine erfindungsgemäße Zugmittelbefestigungseinrichtung Verwendung findet. Das Verfahren umfasst dabei die folgenden Schritte:
- Einsetzen eines Endabschnitts des Zugmittels in eine Zugmittelaufnahme eines inneren Spulenteils (310) der Zugmittelbefestigungseinrichtung,
- Führen eines dem Endabschnitt benachbarten Abschnitts des Zugmittels entlang einer äußeren Mantelfläche eines inneren Hülsenkörpers des inneren Spulenteils, und
- Zusammenführen des inneren Hülsenkörpers mit einem äußeren Hülsenkörper eines äußeren Spulenteils der Zugmittelbefestigungseinrichtung, derart, dass der innere Hülsenkörper, welcher einen Außendurchmesser hat, der kleiner ist als der Innendurchmesser des äußeren Hülsenkörpers, wenigstens abschnittsweise in dem äußeren Hülsenkörper aufgenommen ist; der dem Endabschnitt benachbarte Abschnitt des Zugmittels zwischen dem inneren Hülsenkörper und dem äußeren Hülsenkörper nach der Art einer Presspassung aufgenommen ist; und der dem Endabschnitt benachbarte weitere Abschnitts des Zugmittels aus einem Zugmittelauslass des äußeren Spulenteils herausgeführt ist.

Ein solches Verfahren bietet viele Vorteile, wie sie insbesondere zuvor schon zur erfindungsgemäßen Zugmittelbefestigungseinrichtung beschrieben wurden.

Gemäß einer Ausführungsform ist umfasst das Verfahren ferner den folgenden Schritt:
- Aufstecken der Zugmittelbefestigungseinrichtung auf die Welle der Antriebseinrichtung, derart, dass die Welle in der Wellenaufnahme des inneren Spulenteils aufgenommen ist.

Weitere Vorteile und Merkmale der vorliegenden Erfindung ergeben sich aus dem Ausführungsbeispiel, welches im Folgenden mit Bezug auf die beiliegenden Figuren erläutert wird.

In den Figuren zeigen:
- Figur 1: eine schematische Schnittansicht einer erfindungsgemäßen Haushaltgeräts hier in Form einer Dunstabzugshaubeneinrichtung in einem Oberschrank mit einer Wrasenleiteinrichtung in der Nichtbetriebsstellung;
- Figur 2: eine Detailansicht des unteren Bereichs der Dunstabzugshaubeneinrichtung gemäß Figur 1;
- Figur 3: die Ansicht gemäß Figur 2, wobei die Wrasenleiteinrichtung in einer Stellung zwischen Nichtbetriebsstellung und Betriebsstellung dargestellt ist;
- Figur 4: eine schematische Schnittansicht einer erfindungsgemäße Dunstabzugshaubeneinrichtung in einem Oberschrank mit einer Wrasenleiteinrichtung in der Betriebsstellung;
- Figur 5: eine perpektivische Ansicht einer Gehäuseeinrichtung und Antriebseinrichtung einer erfindungsgemäßen Dunstabzughaube;
- Figur 6: eine schematische Schnittansicht der Welle der Antriebseinrichtung gemäß Figur 5 mit einer daran befestigten erfindungsgemäßen Zugmittelbefestigungseinrichtung;
- Figur 7: eine weitere schematische Schnittansicht der Welle der Antriebseinrichtung gemäß Figur 5 mit einer daran befestigten erfindungsgemäßen Zugmittelbefestigungseinrichtung;
- Figur 8: eine schematische Schnittansicht und eine perspektivische Ansicht eines inneren Spulenteils der Zugmittelbefestigungseinrichtung gemäß Figur 6 und 7; und
- Figur 9: eine schematische Schnittansicht und eine perspektivische Ansicht eines äußeren Spulenteils der Zugmittelbefestigungseinrichtung gemäß Figur 6 und 7.

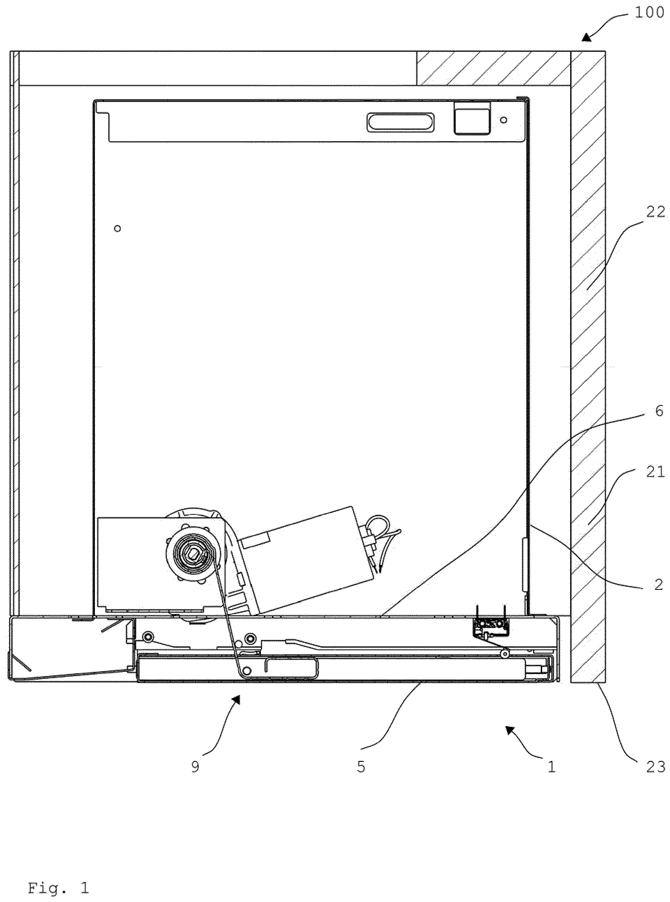

In Figur 1 sieht man in einer rein schematischen seitlichen Schnittansicht ein erfindungsgemäßes Haushaltgerät, welches hier als eine Dunstabzugshaubeneinrichtung 1 ausgeführt ist, die in einen Oberschrank 100 eingebaut ist. Dabei ist die Dunstabzugshaubeneinrichtung 1 im Wesentlichen vollständig in der Korpuseinrichtung 21 des Oberschrankes 100 aufgenommen. Insbesondere schließt die Dunstabzugshaubeneinrichtung 1 unten im Wesentlichen bündig bzw. fluchtend mit der Unterkante 23 der Frontblende 22 des Oberschrankes 100 ab.

Die Dunstabzugshaubeneinrichtung 1 umfasst eine Gehäuseeinrichtung 2 und eine in der Figur 1 nicht näher dargestellte Gebläseeinrichtung sowie ein ebenfalls nicht näher dargestelltes Filterelement.

Dem Ansaugbereich 6 für Wrasen ist eine Wrasenleiteinrichtung 5 zugeordnet, welche mittels einer Verlagerungseinrichtung 9 an der Gehäuseeinrichtung 2 der Dunstabzugshaubeneinrichtung 1 aufgenommen ist. Allgemein ausgedrückt stellt in diesem Beispiel die Wrasenleiteinrichtung 5 die zu bewegende Gerätekomponente dar.

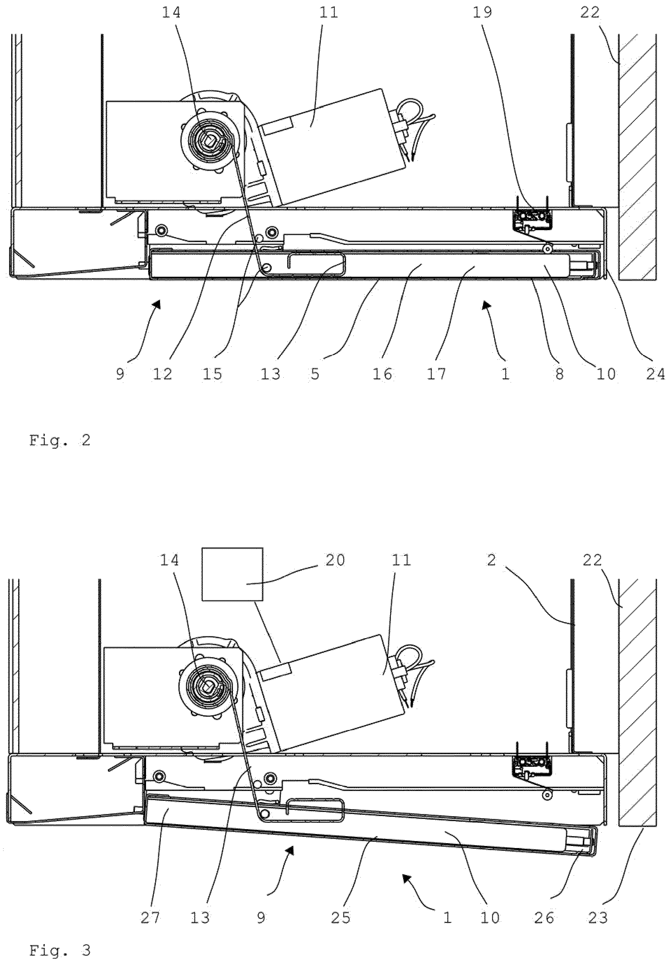

Figur 2 zeigt in einer Vergrößerung den unteren Bereichs der Dunstabzugshaubeneinrichtung 1 in dem Oberschrank 100 gemäß der Figur 1. In Figur 2 ist zu erkennen, dass die Verlagerungseinrichtung 9 eine Motoreinrichtung 11 umfasst, welche eine Welle 14 mit einer darauf aufgewickelten als Zugmittel 13 ausgebildeten Koppeleinrichtung 12 aufweist. Allgemein ausgedrückt stellt in diesem Beispiel die Motoreinrichtung 11 die Antriebseinrichtung dar.

Das Zugmittel 13 ist in dem hier gezeigten Ausführungsbeispiel ein Flachriemen, der über als Führungswellen ausgebildete Umlenkeinrichtungen 15 zur Wrasenleiteinrichtung 5 geleitet ist und dort aufgenommen ist. In anderen Ausgestaltungen kann das Zugmittel 13 auch als Seil, Kette oder dergleichen ausgebildet sein. In anderen Ausgestaltungen kann die Koppeleinrichtung 12 auch z. B. durch einen Zahnstangenantrieb zur Verfügung gestellt werden.

Die Wrasenleiteinrichtung 5 ist in dem hier gezeigten Ausführungsbeispiel mit zwei Vorspanneinrichtungen 10 an der Gehäuseeinrichtung 2 der Dunstabzugshaubeneinrichtung 1 aufgenommen, wobei in der hier dargestellten Schnittansicht nur eine Vorspanneinrichtung 10 zu erkennen ist. Die Vorspanneinrichtung 10 wird durch eine Druckfeder 16, die hier als Gasdruckfeder 17 ausgeführt ist, zur Verfügung gestellt.

Ein Endschalter 19 dient zur Erfassung, dass die Wrasenleiteinrichtung 5 eine bestimmte Stellung, in diesem Beispiel die erste Stellung, welches die Nichtbetriebsstellung 8 ist, erreicht hat, und zum Abschalten der Motoreinrichtung 11, wenn sich die Wrasenleiteinrichtung 5 in besagter Stellung befindet. So kann einerseits die eingefahrene Endstellung bzw. die Nichtbetriebsstellung 8 optimal definiert werden, wobei zusätzlich auch eine Überlast des Motors 11 vermieden wird.

In Figur 3 ist rein schematisch dargestellt, wie die Wrasenleiteinrichtung 5, welche hier als Wrasenschirm 25 ausgebildet ist, von der ersten Stellung, hier also der Nichtbetriebsstellung 8, zunächst in eine Zwischenstellung verlagert wird. Dazu wird mittels einer Steuereinrichtung 20 die Motoreinrichtung 11 aktiviert, wodurch sich die Welle 14 dreht und der darauf aufgerollte Flachriemen 13 abgewickelt wird. Durch das Freigeben des Flachriemens 13 fällt der Wrasenschirm 25, in diesem Beispiel schwerkraftbedingt, aus der Gehäuseeinrichtung 2 nach unten, so dass sich der Wrasenschirm 25 unterhalb der Unterkante 23 der Frontblende 22 des Oberschranks 100 befindet. Dies wird dadurch ermöglicht, dass sowohl der Wrasenschirm 25 als auch die Vorspanneinrichtungen 10 schwenkbar an der Gehäuseeinrichtung 2 der Dunstabzugshaubeneinrichtung 1 aufgenommen sind.

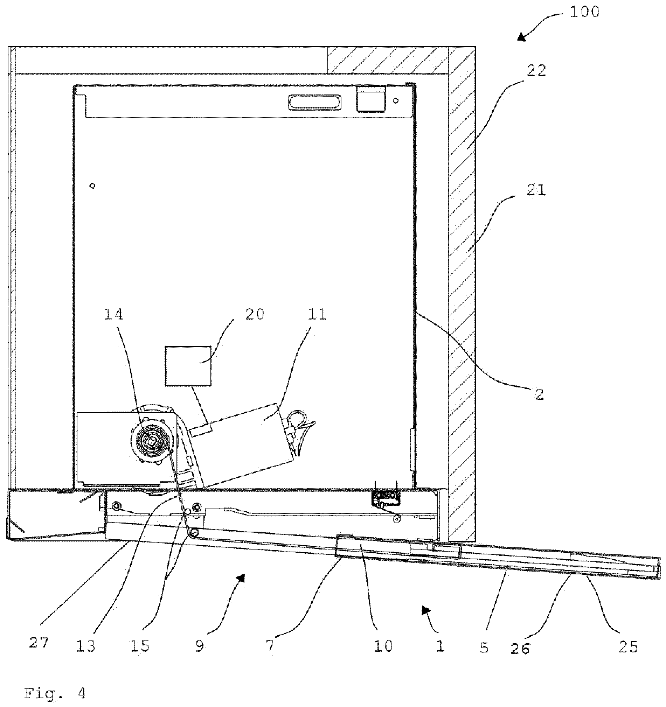

Wie den Figuren 3 und 4 zu entnehmen ist, umfasst die Wrasenleiteinrichtung in dem gezeigten Beispiel einen ersten Teil 27, der schwenkbar an der Gehäuseeinrichtung 2 aufgenommen bzw. gelagert ist, und einen zweiten Teil 26, der teleskopartig gegenüber dem ersten Teil 27 verfahrbar ist. Die Vorspanneinrichtung 10 ist dabei zwischen dem ersten Teil 27 und dem zweiten Teil 26 der Wrasenleiteinrichtung angeordnet. Befindet sich nun die Wrasenleiteinrichtung 5 in der in Figur 3 gezeigten Zwischenstellung, und wird der Flachriemen 13 durch die weiterhin aktivierte Motoreinrichtung 11 weiter von der Welle 14 abgewickelt, kann sich die als Gasdruckfeder ausgebildete Vorspanneinrichtung 10 entspannen und dabei durch ihre Druckkraft den zweiten Teil 26 der Wrasenleiteinrichtung 5 gegenüber dem ersten Teil 27 teleskopartig ausfahren, bis die in Figur 4 gezeigte Stellung, welches die zweite Stellung bzw. die Betriebsstellung 7 ist, erreicht ist. Das Ausfahren der Wrasenleiteinrichtung 5 bzw. des Wrasenschirms 25 erfolgt dabei also abhängig vom Abrollen des Flachriemens 13 von der Welle 14 des Motoreinrichtung 11.

Bei Erreichen der ausgefahrenen Endposition der Wrasenleiteinrichtung 5 bzw. der Betriebsstellung 7 kann die Motoreinrichtung 11 z. B. über eine Zeitsteuerung deaktiviert werden. Das heißt, dass z.B. die Steuereinrichtung 20 die Motoreinrichtung 11 für eine vorbestimmte Zeit in Betrieb nimmt, welche währenddessen genau die Länge des Flachriemens 13 von der Welle 14 abrollt, die benötigt wird, um die Wrasenleiteinrichtung 5 in die Betriebsstellung 7 zu verlagern. In anderen vorteilhaften, hier nicht gezeigten Ausgestaltungen kann die Endposition in der Betriebsstellung 7 auch durch einen Endschalter definiert werden.

Beim Einfahren der Wrasenleiteinrichtung wird die Motoreinrichtung 11 in umgekehrter Richtung betrieben, wodurch der Flachriemen 13 wieder auf die Welle 14 aufgerollt wird. Dadurch wird der Wrasenschirm 25 mittels des Flachriemens 13 über die Umlenkeinrichtungen 15 zunächst nach hinten gezogen, das heißt der zweite Teil 26 wird gegenüber dem ersten Teil 27 des Wrasenschirms 25 teleskopartig eingefahren, bis wieder die in Figur 3 gezeigte Zwischenstellung erreicht ist. Dies erfolgt gegen die Federkraft der Vorspanneinrichtungen 10, so dass diese hierdurch wieder gespannt werden.

Da die Motoreinrichtung 11 immer noch aktiviert ist und den Flachriemen 13 weiter auf die Welle 14 aufwickelt, wird der schwenkbar an der Gehäuseeinrichtung 2 aufgenommene Wrasenschirm 5 nach oben in die Nichtbetriebsstellung 8 verlagert, wie sie in Figur 2 gezeigt ist. In dieser Stellung wird mittels des Endschalters 19 die Motoreinrichtung 11 ausgeschaltet.

Um beim Aus- und Einfahren des Wrasenschirms 25 eine gleiche Geschwindigkeit zu ermöglichen, kann es vorteilhaft sein, die Motoreinrichtung 11 mit zwei verschiedenen elektrischen Spannungen und/oder Drehzahlen zu betreiben. Gegen die Federkraft der Vorspanneinrichtungen 10 wird eine höhere Motorkraft benötigt als beim Ausfahren der Wrasenleiteinrichtung 5, da das Ausfahren mittels der Federkraft der Vorspanneinrichtungen 10 erfolgt.

Die Aktivierung der Motoreinrichtung 11 zum Verlagern der Wrasenleiteinrichtung 5 kann von der Steuereinrichtung 20 bewirkt werden, welche auf eine Benutzereingabe oder auf ein Sensorsignal reagiert. Die Benutzereingabe kann zum Beispiel an einer in den Figuren nicht gezeigten Bedieneinrichtung der Dunstabzugshaubeneinrichtung 1 erfolgen, wobei die Bedieneinrichtung auch eine der Dunstabzugshaubeneinrichtung zugeordnete Fernbedienung sein kann. Das Sensorsignal kann von einem in den Figuren nicht gezeigten Sensor stammen, der zum Beispiel den Betriebszustand der Kochzonen eines unterhalb der Dunstabzugshaubeneinrichtung angeordneten Kochfeldes überwacht.

Durch das erfindungsgemäße dreidimensionale Verlagern der Wrasenleiteinrichtung 5 wird es möglich, die Dunstabzugshaubeneinrichtung 1 im Wesentlichen vollständig in der Korpuseinrichtung 21 des Oberschranks 100 aufzunehmen. Dabei kann insbesondere die Dunstabzugshaubeneinrichtung 1 unten bündig mit der Unterkante 23 der Frontblende 22 abschließen, wodurch ein optisch besonders ansprechendes Erscheinungsbild der Dunstabzugshaubeneinrichtung 1 in dem Oberschrank 100 erreicht werden kann.

In anderen vorteilhaften Ausgestaltungen ist es auch denkbar, dass die Wrasenleiteinrichtung 5 zusätzlich per Hand von der Nichtbetriebsstellung 8 in die Betriebsstellung 7 verlagert werden kann. Dann kann es nötig sein, wenigstens Teile der Verlagerungseinrichtung 9 zu entkoppeln, sodass die Wrasenleiteinrichtung 5 von Hand nach unten und anschließend nach vorne herausgezogen werden kann.

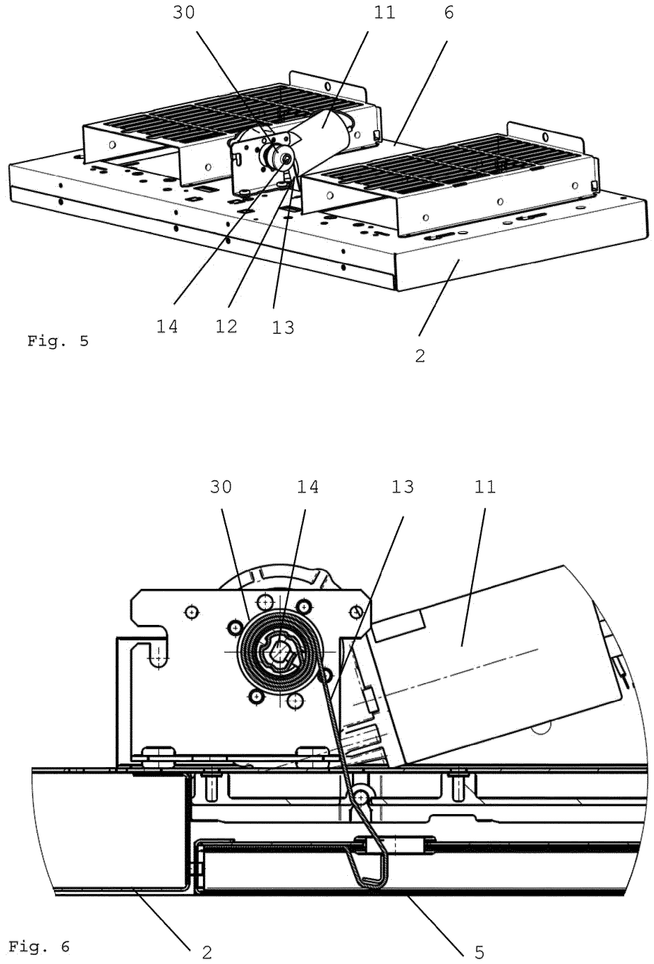

In Figur 5 sieht man in einer perspektivischen Ansicht eine Gehäuseeinrichtung 2 und einen Ansaugbereich 6 einer Dunstabzugshaubeneinrichtung 1, wie sie beispielsweise die Figur 1 zeigt. Daran befestigt ist eine Antriebseinrichtung in Form der Motoreinrichtung 11. An der der Motoreinrichtung 11 zugeordneten Welle 14 ist ein Zugmittel 13 in Form eines Flachriemens bzw. Flachbandes von etwa einem Millimeter Dicke mittels einer erfindungsgemäßen Zugmittelbefestigungseinrichtung 30 befestigt.

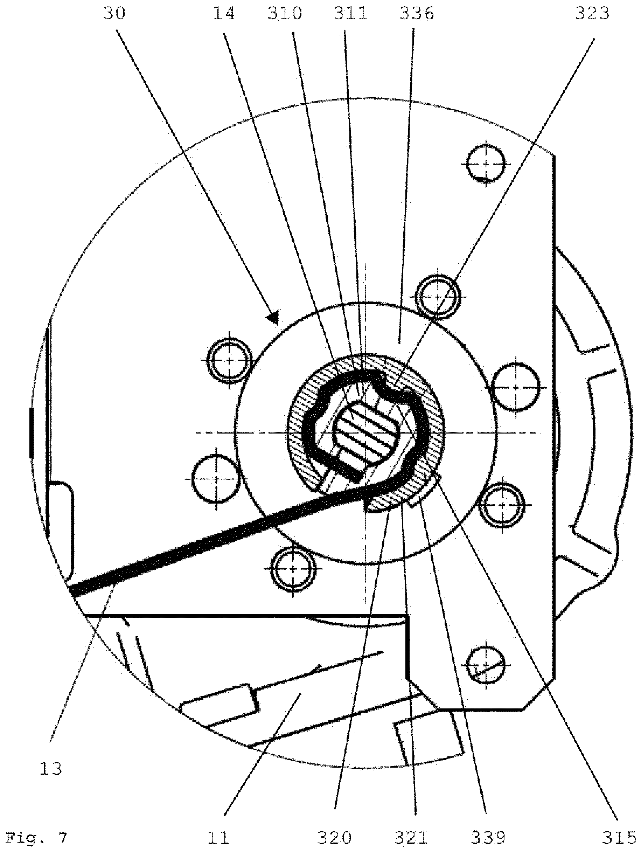

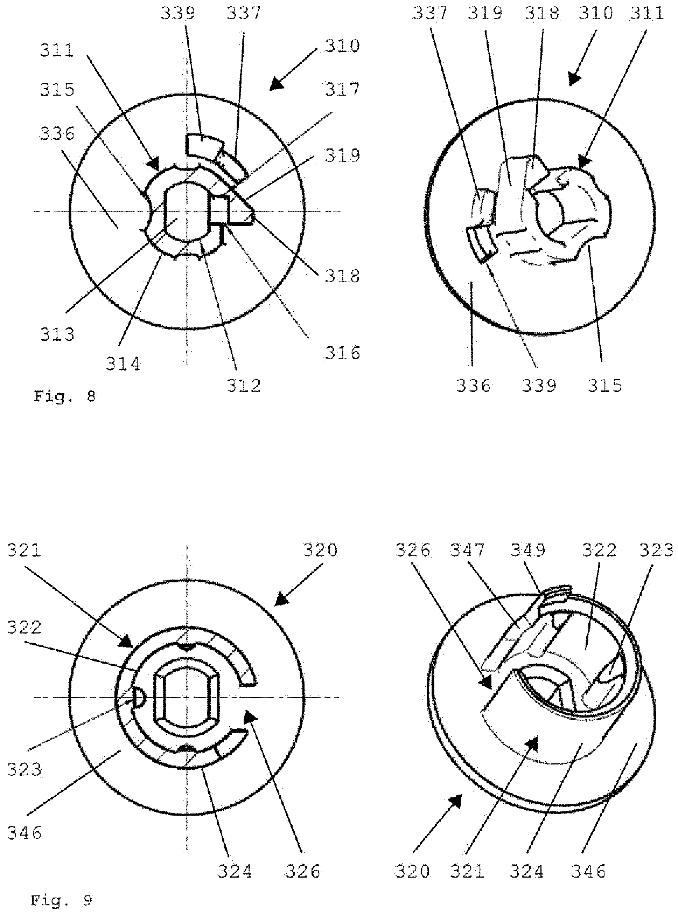

Diese Anordnung ist in Figur 6 in einer schematischen Schnittansicht gezeigt. In der weiteren schematischen Schnittansicht gemäß Figur 7 sind insbesondere die Welle 14 und die Zugmittelbefestigungseinrichtung 30 näher gezeigt. Weitere Merkmale der Zugmittelbefestigungseinrichtung 30 und insbesondere des inneren Spulenteils 301 sowie des äußeren Spulenteils 320 der Zugmittelbefestigungseinrichtung sind aus den Figuren 8 und 9 ersichtlich, die jeweils eine schematische Schnittansicht und eine perspektivische Ansicht der Spulenteile 310 bzw. 320 zeigen.

Wie insbesondere aus den Figuren 7 bis 9 ersichtlich ist, ist mittels der Zugmittelbefestigungseinrichtung 30 das Zugmittel 13, welches hier ein Flachriemen von etwa einem Millimeter Materialstärke ist, an der Welle 14 befestigt. Die Zugmittelbefestigungseinrichtung 30 umfasst dabei einen inneren Spulenteil 310 und einen äußeren Spulenteil 320. Der innere Spulenteil weist einen inneren Hülsenkörper 311, eine Wellenaufnahme 313 für die Welle 14 und eine Zugmittelaufnahme 316 für einen Endabschnitt des Zugmittels 13 auf. Der äußere Spulenteil weist einen äußeren Hülsenkörper 321 und einen Zugmittelauslass 326 für das Zugmittel 13 auf. Beide Spulenteile der Zugmittelbefestigungseinrichtung sind in diesem Beispiel aus Kunststoff gefertigt. Der Außendurchmesser des inneren Hülsenkörpers 311ist kleiner als der Innendurchmesser des äußeren Hülsenkörpers 321, so dass der innere Hülsenkörper in dem äußeren Hülsenkörper aufgenommen ist, wobei ein dem Endabschnitt benachbarter Abschnitt des Zugmittels 13 zwischen dem inneren Hülsenkörper 311 und dem äußeren Hülsenkörper 321 nach der Art einer Presspassung aufgenommen ist. Die Welle 14 ist dabei in der Wellenaufnahme 313 aufgenommen, welche durch die innere Mantelfläche 312 des inneren Hülsenkörpers 311 definiert ist, wobei der Innendurchmesser des inneren Hülsenkörpers 311 kleiner ist als der Außendurchmesser der Welle 14. Somit ist die Welle 14 in der Aufnahme 313 des inneren Hülsenkörper 321 ebenfalls nach der Art einer Presspassung aufgenommen. Des Weiteren weisen die innere Mantelfläche 312 des inneren Hülsenkörpers 311 und die äußere Mantelfläche der Welle 14 jeweils zwei Abflachungen auf. Dabei korrespondieren die Abflachungen der inneren Mantelfläche des inneren Hülsenkörpers 311 mit den Abflachungen der äußeren Mantelfläche der Welle 14, so dass die Welle 14 in der Aufnahme 313 des inneren Hülsenkörper 311 zudem drehfest aufgenommen ist. Dadurch ist ein sicherer Halt der Zugmittelbefestigungseinrichtung auf der Welle und eine gute Kraftübertragung von der Welle auf die Zugmittelbefestigungseinrichtung und über diese auf das Zugmittel gewährleistet.

Dadurch ist außerdem die Montage der Zugmittelbefestigungseinrichtung an der Welle auf einfache Weise und insbesondere Werkzeuglos durch einfaches Aufstecken ermöglicht und auch die beiden Spulenteile können von Hand zusammengesteckt werden. Weitere Vorteile sind, dass außer den beiden Spulenteilen keine weiteren Befestigungsmittel wie Schraube oder Niet erforderlich, um das Zugmittel an der Welle zu befestigen, und dass durch die Zugmittelbefestigungseinrichtung weder der Durchmesser der Welle ungleichmäßig vergrößert noch die Laufruhe der Antriebseinrichtung negativ beeinträchtigt wird.

Die Zugmittelaufnahme 316 ist als eine Aussparung an dem inneren Hülsenkörper 311 ausgebildet und weist einen Anschlag 317 für den Endabschnitt des Zugmittels 13 auf. Ferner ist benachbart zur Zugmittelaufnahme 316 ein Ablenkvorsprung 318 für einen dem Endabschnitt benachbarten weiteren Abschnitt des Zugmittels 13 an dem inneren Hülsenkörpers 311 ausgebildet, wobei der Ablenkvorsprung 318 eine Ablenkschräge 319 aufweist.

Der Zugmittelauslass 326 ist als eine Aussparung an dem äußeren Hülsenkörper 321 ausgebildet. Der dem Endabschnitt benachbarte weitere Abschnitt des Zugmittels 13, welcher zwischen dem inneren Hülsenkörper 311 und dem äußeren Hülsenkörper 321 aufgenommen ist, kann durch den Zugmittelauslass am äußeren Hülsenkörper den Zwischenraum zwischen innerem Hülsenkörper und äußerem Hülsenkörper verlassen.

Der innere Hülsenkörper ist hier derart in dem äußeren Hülsenkörper aufgenommen, dass die am inneren Hülsenkörper 311 ausgebildete Zugmittelaufnahme 316 von dem äußeren Hülsenkörper 321 im Wesentlichen überdeckt ist, wodurch der Endabschnitt des Zugmittels 13 sicher in der Zugmittelaufnahme gehalten wird. Ferner ist der innere Hülsenkörper derart in dem äußeren Hülsenkörper aufgenommen, dass der am inneren Hülsenkörper 311 ausgebildete Ablenkvorsprung 318 im Wesentlichen unterhalb des am äußeren Hülsenkörper 321 ausgebildeten Zugmittelauslasses 326 angeordnet ist. Durch den Ablenkvorsprung und insbesondere durch dessen Ablenkschräge kann der dem Endabschnitt benachbarte Abschnitt des Zugmittels 13, welcher zwischen dem inneren Hülsenkörper 311 und dem äußeren Hülsenkörper 321 aufgenommen ist, in vordefinierter Art und Weise von dem inneren Hülsenkörper auf den äußeren Hülsenkörper abgelenkt werden, wobei der dem Endabschnitt benachbarte Abschnitt des Zugmittels 13 durch den Zugmittelauslass 326 am äußeren Hülsenkörper den Zwischenraum zwischen innerem Hülsenkörper und äußerem Hülsenkörper verlassen kann.

Der dem Endabschnitt benachbarte Abschnitt des Zugmittels 13 ist zwischen dem inneren Hülsenkörper 311 und dem äußeren Hülsenkörper 321 derart aufgenommen, dass er von der Zugmittelaufnahme 316 bis zum Ablenkvorsprung 318 verläuft und dabei den inneren Hülsenkörper im Wesentlichen vollumfänglich umgibt, so dass der Anteil des Abschnitt des Zugmittels 13, welcher zwischen dem inneren Hülsenkörper 311 und dem äußeren Hülsenkörper 321 aufgenommen und mit einem Pressdruck beaufschlagt ist möglichst groß bzw. lang ist, und dadurch ein sicherer Halt gewährleistet ist.

Zusätzlich sind in dem hier, insbesondere in den Figuren 7 bis 9, gezeigten Ausführungsbeispiel an der äußeren Mantelfläche 314 des inneren Hülsenkörpers 311 sowie an der inneren Mantelfläche 322 des äußeren Hülsenkörpers 321 jeweils drei Klemmkonturen 315, 323 ausgebildet. Dabei sind an der inneren Mantelfläche 322 des äußeren Hülsenkörpers 321 drei erste Klemmkonturen 323 in Form von nockenartigen Vorsprüngen angeordnet und an der äußeren Mantelfläche 314 des inneren Hülsenkörpers 311 drei zweite Klemmkonturen 315 in Form von Vertiefungen angeordnet. Die ersten und zweiten Klemmkonturen sind dabei so angeordnet und zueinander ausgerichtet, dass die ersten Klemmkonturen 323 mit den zweiten Klemmkonturen 315 korrespondieren bzw. die ersten Klemmkonturen 323 den zweiten Klemmkonturen 315 jeweils gegenüberliegen. Durch diese Klemmkonturen wird punktuell ein zusätzlicher Pressdruck auf den zwischen dem inneren Hülsenkörper 311 und dem äußeren Hülsenkörper 321 aufgenommenen Abschnitt des Zugmittels 13 ausgeübt. Ferner wird der zwischen dem inneren Hülsenkörper 311 und dem äußeren Hülsenkörper 321 aufgenommene Abschnitt des Zugmittels 13 durch die Klemmkonturen punktuell mäanderartig verformt. Dadurch ist die Befestigung des Zugmittels 13 noch sicherer gestaltet.

Weiterhin sind benachbart zu jeweils einer Stirnseite des inneren und des äußeren Hülsenkörpers 311, 321 flanschartige Auskragungen 336, 346 an dem jeweiligen Hülsenkörper ausgebildet, welche in dem hier gezeigten Beispiel vollumfänglich an dem jeweiligen Hülsenkörper ausgebildet sind. Zum einen stellen die flanschartige Auskragungen im montierten Zustand der Zugmittelbefestigungseinrichtung 30 eine seitliche Führung für das auf die Welle aufzuwickelnde Zugmittel 13 dar. Zum anderen ist an der flanschartigen Auskragung 336 des inneren Hülsenkörpers 311 ein Positioniervorsprung 337 und eine Positionieraussparung 339 ausgebildet, die mit einer an einer einer Stirnseite des äußeren Hülsenkörpers ausgebildeten Positionieraussparung 347 bzw. einem dort ebenfalls ausgebildeten Positioniervorsprung 349 korrespondieren. Das heißt, dass der innere Hülsenkörper derart in dem äußeren Hülsenkörper aufgenommen ist, dass der erste Positioniervorsprung 337 in die erste Positionieraussparung 347 eingreift und der zweite Positioniervorsprung 349 in die zweite Positionieraussparung 339 eingreift. Durch dieses Zusammenwirken eines Positioniervorsprungs mit einer Positionieraussparung kann zum einen bei der Montage der Zugmittelbefestigungseinrichtung eine korrekte bzw. vorbestimmte Ausrichtung des inneren Spulenteiles zu dem äußeren Spulenteil (oder umgekehrt) gewährleistet werden und zum anderen im montierten Zustand der Zugmittelbefestigungseinrichtung sowie auch während des Betriebs eine korrekte bzw. vorbestimmte Ausrichtung des inneren Spulenteiles zu dem äußeren Spulenteil (oder umgekehrt) beibehalten werden.

Das Montageverfahren bzw. das Verfahren zum Befestigen des Zugmittels 13 unter Verwendung einer Zugmittelbefestigungseinrichtung 30 umfasst die folgenden Schritte:
- Einsetzen des Endabschnitts des Zugmittels 13 in die Zugmittelaufnahme 316 eines inneren Spulenteils 310 der Zugmittelbefestigungseinrichtung 30,
- Führen des dem Endabschnitt benachbarten Abschnitts des Zugmittels 13 entlang einer äußeren Mantelfläche 314 eines inneren Hülsenkörpers 311 des inneren Spulenteils 310, und
- Zusammenführen des inneren Hülsenkörpers 311 mit dem äußeren Hülsenkörper 321 des äußeren Spulenteils 320 der Zugmittelbefestigungseinrichtung 30, und zwar derart, dass der innere Hülsenkörper 311, welcher einen Außendurchmesser hat, der kleiner ist als der Innendurchmesser des äußeren Hülsenkörpers, wenigstens abschnittsweise in dem äußeren Hülsenkörper 321 aufgenommen ist; der dem Endabschnitt benachbarte Abschnitt des Zugmittels 13 zwischen dem inneren Hülsenkörper 311 und dem äußeren Hülsenkörper 321 nach der Art einer Presspassung aufgenommen ist; und der dem Endabschnitt benachbarte weitere Abschnitt des Zugmittels 13 aus einem Zugmittelauslass 326 des äußeren Spulenteils 320 herausgeführt ist. Ein weiterer Montageschritt beinhaltet das Aufstecken der Zugmittelbefestigungseinrichtung 30 auf die Welle der Antriebseinrichtung 11, derart, dass die Welle 14 in der Wellenaufnahme 313 des inneren Spulenteils 310 aufgenommen ist.

### Bezugszeichenliste

- 1: Haushaltgerät, Dunstabzugshaubeneinrichtung
- 2: Gehäuseeinrichtung
- 5: Wrasenleiteinrichtung, Gerätekomponente
- 6: Ansaugbereich
- 7: Betriebsstellung, zweite Stellung
- 8: Nichtbetriebsstellung, erste Stellung
- 9: Verlagerungseinrichtung
- 10: Vorspanneinrichtung
- 11: Antriebseinrichtung, Motoreinrichtung
- 12: Koppeleinrichtung
- 13: Zugmittel, Flachriemen
- 14: Welle
- 15: Umlenkeinrichtung
- 16: Druckfeder
- 17: Gasdruckfeder
- 19: Endschalter
- 20: Steuereinrichtung
- 21: Korpuseinrichtung
- 22: Frontblende
- 23: Unterkante
- 25: Wrasenschirm
- 26: zweiter Teil der Wrasenleiteinrichtung
- 27: erster Teil der Wrasenleiteinrichtung
- 100: Oberschrank, Küchenoberschrank
- 30: Zugmittelbefestigungseinrichtung
- 310: innerer Spulenteil
- 311: innerer Hülsenkörper
- 312: innere Mantelfläche des inneren Hülsenkörpers
- 313: Aufnahme für Antriebswelle, Wellenaufnahme
- 314: äußere Mantelfläche des inneren Hülsenkörpers
- 315: zweite Klemmkontur, Aufnahme
- 316: Zugmittelaufnahme, Aufnahme für einen Endabschnitt eines Zugmittels
- 317: Anschlag
- 318: Ablenkvorsprung
- 319: Ablenkschräge
- 336: erster kragenartiger Flansch
- 337: erster Positioniervorsprung
- 339: zweite Positionieraussparung
- 320: äußerer Spulenteil
- 321: äußerer Hülsenkörper
- 322: innere Mantelfläche des äußeren Hülsenkörpers
- 323: erste Klemmkontur, Vorsprung
- 324: äußere Mantelfläche des äußeren Hülsenkörpers
- 326: Zugmittelauslass, Auslass für ein Zugmittel
- 346: zweiter kragenartiger Flansch
- 347: erste Positionieraussparung
- 349: zweiter Positioniervorsprung

## Patentansprüche

1. Haushaltgerät (1), insbesondere Dunstabzugshaube, mit einer motorisch angetriebenen Gerätekomponente,[Beschreibung Seite 1]
umfassend eine Antriebseinrichtung mit einer Welle (14),
wobei an der Welle (14) ein Zugmittel (13) mittels einer Zugmittelbefestigungseinrichtung (30) befestigt ist,
wobei die Zugmittelbefestigungseinrichtung (30) einen inneren Spulenteil (310) und einen äußeren Spulenteil (320) umfasst,
wobei der innere Spulenteil einen inneren Hülsenkörper (311), eine Wellenaufnahme (313) für die Welle (14) der Antriebseinrichtung aufweist,
wobei der äußere Spulenteil einen äußeren Hülsenkörper (321) und einen Zugmittelauslass (326) für das Zugmittel (13) aufweist,
wobei der Außendurchmesser des inneren Hülsenkörpers (311) kleiner ist als der Innendurchmesser des äußeren Hülsenkörpers (321) und der innere Hülsenkörper wenigstens abschnittsweise in dem äußeren Hülsenkörper aufgenommen ist,
wobei die Welle (14) in der Wellenaufnahme (313) aufgenommen ist
**dadurch gekennzeichnet, dass** der innere Spulenteil eine Zugmittelaufnahme (316) für einen Endabschnitt des Zugmittels (13) aufweist und
der Endabschnitt des Zugmittels (13) in der Zugmittelaufnahme (316) aufgenommen ist und
ein dem Endabschnitt benachbarter Abschnitt des Zugmittels (13) zwischen dem inneren Hülsenkörper (311) und dem äußeren Hülsenkörper (321) nach der Art einer Presspassung aufgenommen ist.

2. Haushaltgerät (1) nach vorstehendem Anspruch,
**dadurch gekennzeichnet, dass**
die Zugmittelaufnahme (316) der Zugmittelbefestigungseinrichtung (30) als eine Aussparung an dem inneren Hülsenkörper (311) ausgebildet ist, und die Zugmittelaufnahme (316) insbesondere einen Anschlag (317) für den Endabschnitt des Zugmittels (13) aufweist.

3. Haushaltgerät (1) nach einem der vorstehenden Ansprüche,
**dadurch gekennzeichnet, dass**
benachbart zur Zugmittelaufnahme (316) ein Ablenkvorsprung (318) für einen dem Endabschnitt benachbarten Abschnitt des Zugmittels (13) an dem inneren Hülsenkörpers (311) ausgebildet ist, und der Ablenkvorsprung (318) insbesondere eine Ablenkschräge (319) aufweist.

4. Haushaltgerät (1) nach einem der vorstehenden Ansprüche,
**dadurch gekennzeichnet, dass**
der Zugmittelauslass (326) als eine Aussparung an dem äußeren Hülsenkörper (321) ausgebildet ist.

5. Haushaltgerät (1) nach einem der vorstehenden Ansprüche,
**dadurch gekennzeichnet, dass**
der innere Hülsenkörper derart in dem äußeren Hülsenkörper aufnehmbar ist, dass die am inneren Hülsenkörper ausgebildete Zugmittelaufnahme (316) von dem äußeren Hülsenkörper im Wesentlichen überdeckt ist.

6. Haushaltgerät (1) nach einem der vorstehenden Ansprüche,
**dadurch gekennzeichnet, dass**
der innere Hülsenkörper derart in dem äußeren Hülsenkörper aufnehmbar ist, dass der am inneren Hülsenkörper ausgebildete Ablenkvorsprung (318) im Wesentlichen unterhalb des am äußeren Hülsenkörper ausgebildeten Zugmittelauslasses (326) angeordnet ist.

7. Haushaltgerät (1) nach einem der vorstehenden Ansprüche,
**dadurch gekennzeichnet, dass**
ein dem Endabschnitt benachbarten Abschnitt des Zugmittels (13) zwischen dem inneren Hülsenkörper (311) und dem äußeren Hülsenkörper (321) derart aufnehmbar ist, dass er von der Zugmittelaufnahme (316) bis zum Ablenkvorsprung (318) verläuft und dabei den inneren Hülsenkörper wenigstens anteilig umfänglich umgibt, insbesondere den inneren Hülsenkörper im Wesentlichen vollumfänglich umgibt.

8. Haushaltgerät (1) nach einem der vorstehenden Ansprüche,
**dadurch gekennzeichnet, dass**
an der äußeren Mantelfläche (314) des inneren Hülsenkörpers (311) und/oder an der inneren Mantelfläche (322) des äußeren Hülsenkörpers (321) wenigstens eine Klemmkontur (315, 323) ausgebildet ist.

9. Haushaltgerät (1) nach einem der vorstehenden Ansprüche,
**dadurch gekennzeichnet, dass**
an der inneren Mantelfläche (322) des äußeren Hülsenkörpers (321) wenigstens eine erste Klemmkontur (323) angeordnet ist und an der äußeren Mantelfläche (314) des inneren Hülsenkörpers (311) wenigstens eine zweite Klemmkontur (315) angeordnet ist.

10. Haushaltgerät (1) nach einem der vorstehenden Ansprüche,
**dadurch gekennzeichnet, dass**
der innere Hülsenkörper derart in dem äußeren Hülsenkörper aufnehmbar ist, dass die erste Klemmkontur (323) und die zweite Klemmkontur (315) korrespondieren und insbesondere sich gegenüberliegen,
wobei insbesondere die erste Klemmkontur als Vorsprung oder Vertiefung an der inneren Mantelfläche des äußeren Hülsenkörpers ausgebildet ist und insbesondere die zweite Klemmkontur als Vertiefung oder Vorsprung an der äußeren Mantelfläche des inneren Hülsenkörpers ausgebildet ist.

11. Haushaltgerät (1) nach einem der vorstehenden Ansprüche,
**dadurch gekennzeichnet, dass**
benachbart zu einer der Stirnseiten des inneren Hülsenkörpers (311) und/oder benachbart zu einer der Stirnseiten des äußeren Hülsenkörpers (321) eine flanschartige Auskragung (336, 346) an dem jeweiligen Hülsenkörper ausgebildet ist, welche insbesondere im Wesentlichen vollumfänglich an dem jeweiligen Hülsenkörper ausgebildet ist.

12. Haushaltgerät (1) nach einem der vorstehenden Ansprüche,
**dadurch gekennzeichnet, dass**
an der flanschartigen Auskragung (336) des inneren Hülsenkörpers (311) und/oder an der flanschartigen Auskragung (346) des äußeren Hülsenkörpers (321) ein Positioniervorsprung (337) und/oder eine Positionieraussparung (339) ausgebildet ist, wobei der äußere Hülsenkörper an einer seiner Stirnseiten und/oder der innere Hülsenkörper an einer seiner Stirnseiten eine Positionieraussparung (347) und/oder einen Positioniervorsprung (349) aufweist, und
wobei der innere Hülsenkörper derart in dem äußeren Hülsenkörper aufnehmbar ist, dass der Positioniervorsprung (337) in der Positionieraussparung (347) aufnehmbar ist und/oder dem Positioniervorsprung (349) in der Positionieraussparung (339) aufnehmbar ist.

13. Haushaltgerät (1) nach vorstehendem Anspruch,
wobei die Wellenaufnahme (313) durch die innere Mantelfläche (312) des inneren Hülsenkörpers (311) definiert ist,
wobei der Innendurchmesser des inneren Hülsenkörpers (311) kleiner ist als der Außendurchmesser der Welle (14), und
wobei die Welle (14) in der Aufnahme (313) des inneren Hülsenkörpers (311) nach der Art einer Presspassung aufgenommen ist.

14. Haushaltgerät (1) nach einem der vorstehenden Ansprüche,
wobei die Wellenaufnahme (313) durch die innere Mantelfläche (312) des inneren Hülsenkörpers (311) definiert ist,
wobei die innere Mantelfläche (312) des inneren Hülsenkörpers (311) und die äußere Mantelfläche der Welle (14) jeweils wenigstens eine Abflachung aufweist, und wobei die Abflachung der inneren Mantelfläche des inneren Hülsenkörpers mit der Abflachung der äußeren Mantelfläche der Welle korrespondiert, so dass die Welle (14) in der Aufnahme (313) des inneren Hülsenkörpers (311) drehfest aufgenommen ist.

15. Verfahren zum Befestigen eines Zugmittels (13) unter Verwendung des Haushaltgeräts(1) nach einem der vorstehenden Ansprüche 1 bis 14, umfassend die Schritte:
- Einsetzen eines Endabschnitts des Zugmittels (13) in eine Zugmittelaufnahme (316) eines inneren Spulenteils (310) der Zugmittelbefestigungseinrichtung (30),
- Führen eines dem Endabschnitt benachbarten Abschnitts des Zugmittels (13) entlang einer äußeren Mantelfläche (314) eines inneren Hülsenkörpers (311) des inneren Spulenteils (310),
- Zusammenführen des inneren Hülsenkörpers (311) mit einem äußeren Hülsenkörper (321) eines äußeren Spulenteils (320) der Zugmittelbefestigungseinrichtung (30), derart, dass der innere Hülsenkörper (311), welcher einen Außendurchmesser hat, der kleiner ist als der Innendurchmesser des äußeren Hülsenkörpers, wenigstens abschnittsweise in dem äußeren Hülsenkörper (321) aufgenommen ist; der dem Endabschnitt benachbarte Abschnitt des Zugmittels (13) zwischen dem inneren Hülsenkörper (311) und dem äußeren Hülsenkörper (321) nach der Art einer Presspassung aufgenommen ist; und der dem Endabschnitt benachbarte weitere Abschnitts des Zugmittels aus einem Zugmittelauslass des äußeren Spulenteils herausgeführt ist.

16. Verfahren zum Befestigen eines Zugmittels (13) nach dem vorstehenden Anspruch, ferner umfassend den Schritt:
- Aufstecken der Zugmittelbefestigungseinrichtung (30) auf die Welle der Antriebseinrichtung (11), derart, dass die Welle (14) in der Wellenaufnahme (313) des inneren Spulenteils (310) aufgenommen ist.

## Claims

1. Domestic appliance (1), in particular an extractor hood, comprising a motor driven appliance component, comprising a drive device having a shaft (14),
a tension means (13) being fastened to the shaft (14) by means of a tension-means fastening device (30),
the tension-means fastening device (30) comprising an inner coil part (310) and an outer coil part (320),
the inner coil part comprising an inner sleeve body (311) and a shaft receptacle (313) for the shaft (14) of the drive device,
the outer coil part comprising an outer sleeve body (321) and a tension-means outlet (326) for the tension means (13),
the external diameter of the inner sleeve body (311) being smaller than the inner diameter of the outer sleeve body (321), and the inner sleeve body being received, at least in portions, in the outer sleeve body,
the shaft (14) being received in the shaft receptacle (313),
**characterised in that**
the inner coil part comprises a tension-means holder (316) for an end portion of the tension means (13)
and the end portion of the tension means (13) is held in the tension-means holder (316) and
a portion of the tension means (13) adjacent to the end portion is held between the inner sleeve body (311) and the outer sleeve body (321) in the manner of an interference fit.

2. Domestic appliance (1) according to the preceding claim, **characterised in that** the tension-means holder (316) of the tension-means fastening device (30) is in the form of a recess in the inner sleeve body (311), and the tension-means holder (316) comprises in particular a stop (317) for the end portion of the tension means (13).

3. Domestic appliance (1) according to either of the preceding claims, **characterised in that** a deflection protrusion (318) is formed, adjacent to the tension-means holder (316), on the inner sleeve body (311) for a portion of the tension means (13) adjacent to the end portion, and the deflection protrusion (318) comprises in particular a deflection slope (319).

4. Domestic appliance (1) according to any of the preceding claims, **characterised in that** the tension-means outlet (326) is in the form of a recess in the outer sleeve body (321).

5. Domestic appliance (1) according to any of the preceding claims, **characterised in that** the inner sleeve body can be received in the outer sleeve body such that the tension-means holder (316) formed on the inner sleeve body is substantially covered by the outer sleeve body.

6. Domestic appliance (1) according to any of the preceding claims, **characterised in that** the inner sleeve body can be received in the outer sleeve body such that the deflection protrusion (318) formed on the inner sleeve body is arranged substantially beneath the tension-means outlet (326) formed on the outer sleeve body.

7. Domestic appliance (1) according to any of the preceding claims, **characterised in that** a portion of the tension means (13) adjacent to the end portion can be held between the inner sleeve body (311) and the external sleeve body (321) such that said portion extends from the tension-means holder (316) as far as the deflection protrusion (318) and, in so doing, at least partially surrounds the circumference of the inner sleeve body, in particular substantially surrounds the entire circumference of the inner sleeve body.

8. Domestic appliance (1) according to any of the preceding claims, **characterised in that** at least one clamping contour (315, 323) is formed on the outer lateral surface (314) of the inner sleeve body (311) and/or on the inner lateral surface (322) of the outer sleeve body (321).

9. Domestic appliance (1) according to any of the preceding claims, **characterised in that** at least one first clamping contour (323) is arranged on the inner lateral surface (322) of the outer sleeve body (321) and at least one second clamping contour (315) is arranged on the outer lateral surface (314) of the inner sleeve body (311).

10. Domestic appliance (1) according to any of the preceding claims, **characterised in that** the inner sleeve body can be received in the outer sleeve body such that the first clamping contour (323) and the second clamping contour (315) correspond and in particular are opposite one another,
in particular the first clamping contour being in the form of a protrusion or indent on the inner lateral surface of the outer sleeve body and in particular the second clamping contour being in the form of an indent or protrusion on the outer lateral surface of the inner sleeve body.

11. Domestic appliance (1) according to any of the preceding claims, **characterised in that** a flange-like projection (336, 346) is formed on each sleeve body, adjacent to one of the end faces of the inner sleeve body (311) and/or adjacent to one of the end faces of the outer sleeve body (321), which flange-like projection is in particular formed substantially completely around the circumference of the corresponding sleeve body.

12. Domestic appliance (1) according to any of the preceding claims, **characterised in that** a positioning protrusion (337) and/or a positioning recess (339) is formed on the flange-like projection (336) of the inner sleeve body (311) and/or on the flange-like projection (346) of the outer sleeve body (321), the outer sleeve body comprising, on one of its end faces, and/or the inner sleeve body comprising, on one of its end faces, a positioning recess (347) and/or a positioning protrusion (349), and
it being possible for the inner sleeve body to be received in the outer sleeve body such that the positioning protrusion (337) can be received in the positioning recess (347) and/or the positioning protrusion (349) can be received in the positioning recess (339).

13. Domestic appliance (1) according to the preceding claim,
wherein the shaft receptacle (313) is defined by the inner lateral surface (312) of the inner sleeve body (311),
wherein the inner diameter of the inner sleeve body (311) is smaller than the external diameter of the shaft (14), and
wherein the shaft (14) is received in the receptacle (313) of the inner sleeve body (311) in the manner of an interference fit.

14. Domestic appliance (1) according to any of the preceding claims,
wherein the shaft receptacle (313) is defined by the inner lateral surface (312) of the inner sleeve body (311),
wherein the inner lateral surface (312) of the inner sleeve body (311) and the outer lateral surface of the shaft (14) have at least one flattened region in each case, and wherein the flattened region of the inner lateral surface of the inner sleeve body corresponds to the flattened region of the outer lateral surface of the shaft, such that the shaft (14) is received in the receptacle (313) of the inner sleeve body (311) for conjoint rotation therewith.

15. Method for fastening a tension means (13) using the domestic appliance (1) according to any of the preceding claims 1 to 14, comprising the steps of:
- inserting an end portion of the tension means (13) into a tension-means holder (316) of an inner coil part (310) of the tension-means fastening device (30),
- guiding a portion of the tension means (13) adjacent to the end portion along an outer lateral surface (314) of an inner sleeve body (311) of the inner coil part (310),
- bringing the inner sleeve body (311) together with an outer sleeve body (321) of an outer coil part (320) of the tension-means fastening device (30) such that the inner sleeve body (311), which has an external diameter smaller than the inner diameter of the outer sleeve body, is received, at least in portions, in the outer sleeve body (321); the portion of the tension means (13) adjacent to the end portion is held between the inner sleeve body (311) and the outer sleeve body (321) in the manner of an interference fit; and the further portion of the tension means adjacent to the end portion is guided out of a tension-means outlet of the outer coil part.

16. Method for fastening a tension means (13) according to the preceding claim, further comprising the step of:
- pushing the tension-means fastening device (30) onto the shaft of the drive device (11) such that the shaft (14) is received in the shaft receptacle (313) of the inner coil part (310).

## Revendications

1. Appareil ménager (1), en particulier hotte aspirante, comprenant un composant d'appareil entraîné de façon motorisée,
comportant un dispositif d'entraînement doté d'un arbre (14),
un lien souple (13) étant fixé à l'arbre (14) au moyen d'un dispositif de fixation de lien souple (30),
le dispositif de fixation de lien souple (30) comportant une partie de bobine intérieure (310) et une partie de bobine extérieure (320),
la partie de bobine intérieure comprenant un corps formant douille intérieur (311) et un logement d'arbre (313) pour l'arbre (14) du dispositif d'entraînement,
la partie de bobine extérieure comprenant un corps formant douille extérieur (321) et une sortie de lien souple (326) pour le lien souple (13),
le diamètre extérieur du corps formant douille intérieur (311) étant inférieur au diamètre intérieur du corps formant douille extérieur (321) et le corps formant douille intérieur étant logé au moins dans certaines régions dans le corps formant douille extérieur,
l'arbre (14) étant logé dans le logement d'arbre (313),
**caractérisé en ce que** la partie de bobine intérieure comprend un logement de lien souple (316) pour une partie d'extrémité du lien souple (13) et
la partie d'extrémité du lien souple (13) est logée dans le logement de lien souple (316) et
une partie, adjacente à la partie d'extrémité, du lien souple (13) est logée entre le corps formant douille intérieur (311) et le corps formant douille extérieur (321) à la manière d'un ajustement serré.

2. Appareil ménager (1) selon la revendication précédente,
**caractérisé en ce que**
le logement de lien souple (316) du dispositif de fixation de lien souple (30) est réalisé sous forme d'évidement sur le corps formant douille intérieur (311) et le logement de lien souple (316) comprend en particulier une butée (317) pour la partie d'extrémité du lien souple (13).

3. Appareil ménager (1) selon l'une des revendications précédentes,
**caractérisé en ce que**
une saillie de déviation (318) pour une partie, adjacente à la partie d'extrémité, du lien souple (13) est réalisée sur le corps formant douille intérieur (311), de manière adjacente au logement de lien souple (316), et la saille de déviation (318) comprend en particulier un biseau de déviation (319).

4. Appareil ménager (1) selon l'une des revendications précédentes,
**caractérisé en ce que**
la sortie de lien souple (326) est réalisée sous forme d'évidement sur le corps formant douille extérieur (321).

5. Appareil ménager (1) selon l'une des revendications précédentes,
**caractérisé en ce que**
le corps formant douille intérieur peut être logé dans le corps formant douille extérieur de telle sorte que le logement de lien souple (316) réalisé sur le corps formant douille intérieur puisse être recouvert sensiblement par le corps formant douille extérieur.

6. Appareil ménager (1) selon l'une des revendications précédentes,
**caractérisé en ce que**
le corps formant douille intérieur peut être logé dans le corps formant douille extérieur de telle sorte que la saillie de déviation (318) réalisée sur le corps formant douille intérieur soit disposée sensiblement en dessous de la sortie de lien souple (326) réalisée sur le corps formant douille extérieur.

7. Appareil ménager (1) selon l'une des revendications précédentes,
**caractérisé en ce que**
une partie, adjacente à la partie d'extrémité, du lien souple (13) peut être logée entre le corps formant douille intérieur (311) et le corps formant douille extérieur (321) de telle sorte qu'elle s'étende du logement de lien souple (316) à la saillie de déviation (318) et entoure de manière périphérique au moins partiellement le corps formant douille intérieur, en particulier entoure le corps formant douille intérieur sensiblement sur toute sa périphérie.

8. Appareil ménager (1) selon l'une des revendications précédentes,
**caractérisé en ce que**
au moins un contour de serrage (315, 323) est réalisé sur la surface d'enveloppe extérieure (314) du corps formant douille intérieur (311) et/ou sur la surface d'enveloppe intérieure (322) du corps formant douille extérieur (321).

9. Appareil ménager (1) selon l'une des revendications précédentes,
**caractérisé en ce que**
au moins un premier contour de serrage (323) est disposé sur la surface d'enveloppe intérieure (322) du corps formant douille extérieur (321) et au moins un deuxième contour de serrage (315) est disposé sur la surface d'enveloppe extérieure (314) du corps formant douille intérieur (311).

10. Appareil ménager (1) selon l'une des revendications précédentes,
**caractérisé en ce que**
le corps formant douille intérieur peut être logé dans le corps formant douille extérieur de telle sorte que le premier contour de serrage (323) et le deuxième contour de serrage (315) correspondent l'un à l'autre et en particulier soient en regard l'un de l'autre,
le premier contour de serrage étant en particulier réalisé sous forme de saillie ou de cavité sur la surface d'enveloppe intérieure du corps formant douille extérieur et le deuxième contour de serrage étant en particulier réalisé sous forme de cavité ou de saillie sur la surface d'enveloppe extérieure du corps formant douille intérieur.

11. Appareil ménager (1) selon l'une des revendications précédentes,
**caractérisé en ce que**
une avancée (336, 346) en forme de collet est réalisée sur le corps formant douille respectif de manière adjacente à l'une des faces frontales du corps formant douille intérieur (311) et/ou de manière adjacente à l'une des faces frontales du corps formant douille extérieur (321), laquelle avancée est réalisée en particulier sensiblement sur toute la périphérie sur le corps formant douille respectif.

12. Appareil ménager (1) selon l'une des revendications précédentes,
**caractérisé en ce que**
une saillie de positionnement (337) et/ou un évidement de positionnement (339) sont réalisés sur l'avancée (336) en forme de collet du corps formant douille intérieur (311) et/ou sur l'avancée (346) en forme de collet du corps formant douille extérieur (321),
le corps formant douille extérieur comprenant un évidement de positionnement (347) et/ou une saillie de positionnement (349) sur l'une de ses faces frontales et/ou le corps formant douille intérieur comprenant un évidement de positionnement (347) et/ou une saillie de positionnement (349) sur l'une de ses faces frontales, et
le corps formant douille intérieur pouvant être logé dans le corps formant douille extérieur de telle sorte que la saillie de positionnement (337) puisse être logée dans l'évidement de positionnement (347) et/ou que la saillie de positionnement (349) puisse être logée dans l'évidement de positionnement (339).

13. Appareil ménager (1) selon la revendication précédente
dans lequel le logement d'arbre (313) est défini par la surface d'enveloppe intérieure (312) du corps formant douille intérieur (311),
dans lequel le diamètre intérieur du corps formant douille intérieur (311) est inférieur au diamètre extérieur de l'arbre (14) et
dans lequel l'arbre (14) est logé dans le logement (313) du corps formant douille intérieur (311) à la manière d'un ajustement serré.

14. Appareil ménager (1) selon l'une des revendications précédentes dans lequel le logement d'arbre (313) est défini par la surface d'enveloppe intérieure (312) du corps formant douille intérieur (311),
dans lequel la surface d'enveloppe intérieure (312) du corps formant douille intérieur (311) et la surface d'enveloppe extérieure de l'arbre (14) comprennent respectivement au moins un méplat, et
dans lequel le méplat de la surface d'enveloppe intérieure du corps formant douille intérieur correspond au méplat de la surface d'enveloppe extérieure de l'arbre, de telle sorte que l'arbre (14) soit logé de manière solidaire en rotation dans le logement (313) du corps formant douille intérieur (311).

15. Procédé permettant de fixer un lien souple (13) à l'aide de l'appareil ménager (1) selon l'une des revendications précédentes 1 à 14, le procédé comprenant les étapes consistant à :
- insérer une partie d'extrémité du lien souple (13) dans un logement de lien souple (316) d'une partie de bobine intérieure (310) du dispositif de fixation de lien souple (30),
- guider une partie, adjacente à la partie d'extrémité, du lien souple (13) le long d'une surface d'enveloppe extérieure (314) d'un corps formant douille intérieur (311) de la partie de bobine intérieure (310),
- réunir le corps formant douille intérieur (311) et un corps formant douille extérieur (321) d'une partie de bobine extérieure (320) du dispositif de fixation de lien souple (30) de telle sorte que le corps formant douille intérieur (311), lequel a un diamètre extérieur qui est inférieur au diamètre intérieur du corps formant douille extérieur, soit logé au moins dans certaines régions dans le corps formant douille extérieur (321) ; la partie, adjacente à la partie d'extrémité, du lien souple (13) étant logée entre le corps formant douille intérieur (311) et le corps formant douille extérieur (321) à la manière d'un ajustement serré ; et l'autre partie, adjacente à la partie d'extrémité, du lien souple étant guidée hors d'une sortie de lien souple de la partie de bobine extérieure.

16. Procédé permettant de fixer un lien souple (13) selon la revendication précédente, comportant en outre l'étape consistant à :
- enficher le dispositif de fixation de lien souple (30) sur l'arbre du dispositif d'entraînement (11) de telle sorte que l'arbre (14) soit logé dans le logement d'arbre (313) de la partie de bobine intérieure (310).
